# EUROPEAN PATENT APPLICATION

(11) **EP 3 995 291 A1**
(43) Date of publication of application: **11.05.2022**
(21) Application number: 21206459.6
(22) Date of filing: 04.11.2021
(51) Int. Cl.: B29C 64/165, B29C 64/188, B33Y 10/00, B33Y 30/00, B33Y 70/00, B22F 10/50, B29C 64/241

(54) **PATTERN-WISE DEPOSITION OF ANTI-SINTERING AGENTS VIA SURFACE ENERGY MODULATION FOR 3D PRINTING**

(30) Priority: 10.11.2020 US 202017094506
(71) Applicant: Palo Alto Research Center Incorporated, Webster, NY 14580 (US)
(72) Inventor: CHINTAPALLI, Mahati, Mountain View, 94041 (US); PLOCHOWIETZ, Anne, Palo Alto, 94306 (US); PATTEKAR, Ashish V., Cupertino, 95014 (US); LU, Jengping, Fremont, 94304 (US); JACKSON, Warren, San Francisco, 94116 (US)
(74) Representative: Gill Jennings & Every LLP

(57) **Abstract**

A system has a surface, a feedstock deposition head arranged to deposit a sinterable feedstock having a binder on the surface, a patterning system arranged adjacent the surface to change the feedstock surface energy according to a pattern to form selective surface energy patterns on the feedstock, a sintering-selectivity material deposition head arranged adjacent the feedstock deposition head to deposit sintering-selectivity fluid, the sintering-selectivity fluid selected to conform to the selective surface energy patterns, and a sintering chamber to sinter the feedstock after deposition of the anti-sintering agent. A method of forming three-dimensional objects includes depositing a, sinterable feedstock onto a surface, forming a surface energy pattern in the sinterable feedstock by pattern-wise debinding of the binder from the sinterable feedstock, depositing a fluid comprising a sintering-selectivity material mixed with a solvent selected to cause the sintering-selectivity material to conform to the surface energy pattern, and sintering the feedstock.

## Description

### RELATED CASES

This application is related to co-pending US Patent Application No. 17/077,062, filed October 22, 2020.

### TECHNICAL FIELD

This disclosure relates to 3D printing, more particularly to 3D printing of sinterable, cohesive, dense, feedstocks.

### BACKGROUND

Selective inhibition sintering is a 3D printing technique in which metal feedstock, typically metal powder, undergoes pattern-wise sintering to create a 3D geometry of interest. The patterning results from deposition of a sintering inhibitor on a thin layer of the feedstock, typically the metal powder mixed with a binder, in a pattern that corresponds to the cross-sectional boundary of the geometry of interest. This process repeats layer-by-layer to build up the 3D part. The sintering inhibitor creates a barrier on the metal particle surfaces which prevents particle-particle connections during sintering, creating a release boundary to separate the part from the surrounding area.

A common approach patterns the inhibitor via ink-jetting, where a print head deposits a solution of suspended inhibitor agent in the desired pattern. Enabling complete penetration of the inhibitor agent may involve an extra mechanism to debind the binder from the metal or other sinterable feedstock in a first pattern-wise fashion before the inhibitor agent is then applied also in a pattern-wise fashion. This requires precise registration and alignment between the debinding and the deposition steps.

One current approach to achieve the coinciding laser-based, thermal debinding and the ink-jetted anti-sintering agent patterns is to use a spatial light modulator such as a Grating Light Valve (GLV) or Digital Micromirror Device (DMD) system that provides on-the-fly patterning of high intensity laser light on the layer of metal feedstock plus binder to thermally remove or decompose the binder. This is followed by precise alignment of an ink-jet print head that adds the patterned anti-sintering agent solution on top of the thermally debound pattern. However, this requires precise and expensive alignment between the two patterning systems to register the two patterns, and can lead to defects in the final part in case of registration or alignment errors. This also results in the ultimate speed of the print system to be limited by the slowest step, typically the laser patterning or ink-jetting, as both processes need to be implemented in sync for the process to work correctly.

### SUMMARY

According to aspects illustrated here, there is provided a system having a surface, a feedstock deposition head arranged to deposit a sinterable feedstock having a binder onto the surface, a patterning system arranged adjacent the surface to change the feedstock surface energy according to a pattern to form selective surface energy patterns on the feedstock, a sintering-selectivity material deposition head arranged adjacent the feedstock deposition head to deposit sintering-selectivity fluid, the sintering-selectivity fluid selected to conform to the selective surface energy patterns, and a sintering chamber to sinter the feedstock after deposition of the anti-sintering agent.

According to aspects illustrated here, there is provided a method of forming three-dimensional objects that includes depositing a sinterable feedstock comprising a binder onto a surface, forming a surface energy pattern in the sinterable feedstock by pattern-wise debinding of the binder from the sinterable feedstock, depositing a fluid comprising a sintering-selectivity material mixed with a solvent selected to cause the sintering-selectivity material to conform to the surface energy pattern, and sintering the feedstock.

### BRIEF DESCRIPTION OF THE DRAWINGS

Fig. 1 shows an embodiment of a three-dimensional, cylindrical deposition system.
Figure 2 shows a system to deposit sintering-selectivity material in a three-dimensional, cylindrical manufacturing system.
Figure 3 shows flowchart of one embodiment of a method of three-dimensional manufacturing.

### DETAILED DESCRIPTION OF THE EMBODIMENTS

In three-dimensional manufacturing situations where the feedstock needs to be self-supporting, meaning that it hold its own shape prior to the sintering step, the metal powder is typically mixed with a polymer binder. In this situation, it becomes important that the binder moves out of the way to gain access to the metal particle surface. The embodiments here employ a sintering selectivity material. The process uses the material to create boundaries between individual parts being manufactured.

The material may form a negative pattern, in which the material acts as sintering inhibitor that causes the areas to which the material is applied to not undergo sintering. The process will apply a sintering inhibitor in the negative spaces around the parts. This allows the sintered parts to separate from the unsintered feedstock. Alternatively, the material may form a positive pattern in which the sintering selectivity material acts as a sintering promoter, causing the parts to undergo sintering where the boundaries do not.

An important aspect of the process is that the sintering selectivity material be able to penetrate through the thickness of the feedstock layer, which may be approximately 100 microns thick, in order to provide a contiguous boundary between parts.

Providing an additional mechanism to enable complete penetration of the sintering selectivity material has benefits. The process first thermally debinds the binder according to a pattern, such as by vaporizing, chemically decomposing, or burning off the binder using a patterned energy source like a laser before the sintering selectivity material is applied. However, in current approaches this two-step patterning process would require precise registration and alignment of the inkjet and laser imaging systems, which can be complicated and expensive.

The embodiments here solve this registration problem by utilizing inherent surface energy and surface tension properties of the binder containing metal powder, the combination of which makes up the feedstock, and the sintering selectivity material. The embodiments may use a single patterning system and a sintering selectivity material that carries a sintering prohibitor or promoter agent that penetrates when the debinding process causes a surface energy contrast. This obviates the need for a separate sintering selectivity material patterning system. This reduces complexity and cost, and eliminates potential defects that may arise due to imprecise registration between the debound pattern and the sintering selectivity material pattern.

The embodiments enable continuous high speed 3D printing of sinterable, cohesive, dense feedstocks. As used here, the term "dense" means a material having a porosity of 30 % or less. As used here the term "cohesive" means the feedstock has a tensile yield stress of 100 kPa or more after being deposited or fixed, 10 kPa or more, 1 kPa or more, 100 Pa or more, or a 50 Pa or more. A "cohesive" feedstock is also one that is not a flowing powder, not a flow powder after being deposited, or not a flowing powder immediately prior to deposition. The material may have a porosity of 20%, 10%, 5%, or 1%, or less. Continuous high-speed 3D printing, which may be referred to as EHTAL (Embedded High-speed Turning for Additive Layering), involves depositing a feedstock onto a turning, outwardly growing cylinder. The technology has the potential to enable high speed production of parts including high value ceramic and metal parts. Unlike traditional layer-by-layer 3D printing techniques, in which feedstock materials are supported by a build platform, tank, box, or bed, here the feedstock is only supported by a central rod or cylinder. The feedstocks for this type of manufacturing need to be cohesive, dense, and self-supporting.

The embodiments solve these problems by using appropriate combinations of binder and a sintering selectivity material, such that the pattern-wise thermal debinding step creates a wetting zone only where the binder has been thermally removed by the directed energy pattern. The thermal debinding process thus provides a surface energy pattern that results in the desired selectivity for through-penetration of the sintering selectivity material, and avoids a separate patterning step that requires alignment and registration.

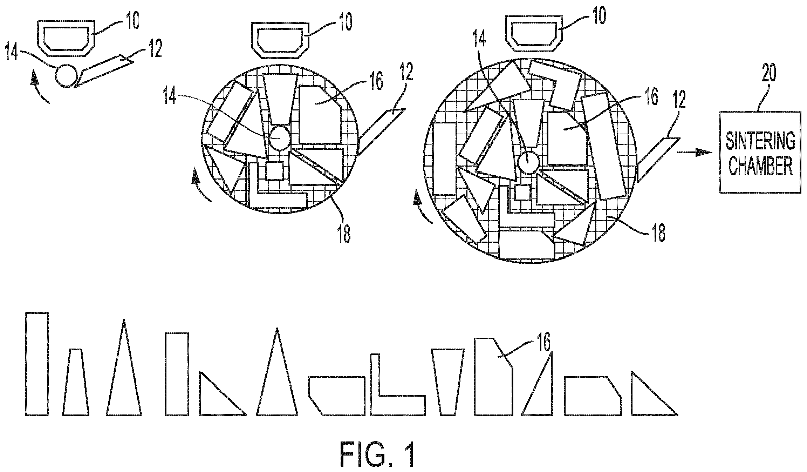

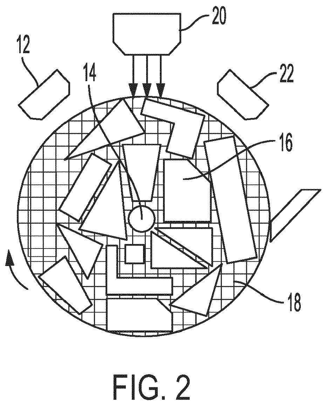

In Figure 1, the manufacturing system 10 has a rotating cylinder has a feedstock applied to it by a deposition device 12. Many types of deposition devices could be used, as discussed regarding Figure 2. As the cylinder rotates, the most recently applied feedstock layer receives a pattern of sintering selectivity material from the deposition device 12 and may undergo debinding, a process in which the sinterable material is separated from a binder. The binder allows powdered sinterable materials to exist in a cohesive form, which may also be referred to as a paste, melt, emulsion, or slurry, for application to the cylinder 14. The sintering selectivity material marks a boundary, either positively or negatively, to define the part.

As the cylinder passes the deposition head, the sintering selectivity material deposition acts on the current layer of feedstock before the next layer is applied. As the build 18 grows, which consists of at least the feedstock of sinterable material and binder plus the sintering selectivity material, the parts such as 16 are defined within it. Upon completion of the build at the far right, the build undergoes sintering in sintering chamber 20 and separation, resulting in the individual parts such as 16 shown below.

In the embodiments here, the layers still receive sintering selectivity material, but do so after the surface energy of the most current layer has undergone patterning to define where the material will apply. In Figure 2, the cylinder 14 passes by the deposition device 12 to receive the feedstock. The parts such as 16 are differentiated from the build at each layer, forming the parts after multiple passes. The feedstock may be dense and cohesive, or may comprise an unbound powder that could be processed by the patterning illumination system 20 and then receiving the sintering selectivity material at 22. For unbound powders, the deposition device 12 may be located as shown in Figure 2, and with dense, cohesive feedstocks it may be located as shown in Figure 1. Either option may be used in any and all embodiments.

As the current layer of material passes by the patterning illumination system 20, the system directs energy such as laser light, UV light, etc., towards the surface of the layer, forming a defined surface energy pattern. The deposition head 22 then deposits the sintering selectivity fluid in the defined zones. As discussed above, the defined zones may consist of the negative space around the parts to define boundaries between parts, or positive space defining the parts themselves. The cylinder then continues to rotate to receive the next layer of material from the deposition head 12 and the process continues until the build is completed. The build then undergoes sintering and separation.

The patterning illumination system may comprise a light or other energy source and a pattern-wise transfer device that transfers the energy to the surface of the current layer in accordance with a pattern. The energy source may comprise a laser, a UV light source, infrared, X-ray, etc. The pattern-wise transfer device may comprise a spatial light modulator, such as an array of grating light valves (GLV), a digital micromirror device (DMD), or other arrays of light valves or shutters. Any apparatus that can transfer the energy to the surface in accordance with a pattern will serve. No limitation to any particular device is intended and none should be implied. Similarly, while Figures 1 and 2 show the feedstock deposition head 12 as a doctor blade, the system may employ any means of material deposition. The sintering selectivity deposition may also result from a doctor blade, roller, or any other means of material deposition.

Alternately, surface energy patterning could be achieved by exposing the surface to ion or particle bombardment, plasma treatment, oxygen plasma treatment, electron bombardment, or chemical modifiers in a patterned manner, instead of or in addition to photon-based energy sources such as lasers, or UV sources.

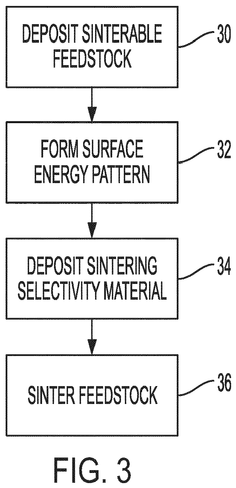

Figure 3 shows a summary of the process. At 30, the system deposits sinterable feedstock. The surface energy pattern is formed at 32. The system then deposits the sintering selectivity material at 34. The process duplicates these steps as necessary to achieve the desired part geometries. Finally, the printed parts are sintered at 36.

The discussion now turns to examples of materials usable in the process. Some examples of materials that can be sintered are: stainless steel alloys such as 17-4PH, carbonyl iron, 316, magnetic alloys, copper-nickel alloys, titanium, copper, alumina, zirconia, aluminosilicate minerals and glasses, polymer particles, and many others including various metals, metal alloys, ceramics, and plastics / polymers.

Binder for the feedstock may be hydrophobic or hydrophilic, and it may contain thermoplastic or thermoset components. Some active binder materials include: polyethylene, polypropylene, polyoxymethylene, paraffin, carnuba wax, polypropylene oxide, polybutylene oxide (hydrophobic thermoplastics); polyethylene oxide, polypropylene carbonate, polybutylene carbonate, alginate, agar, cellulose, methylcellulose, methylcellulose-based compounds, sodium lignosulfonate, polyvinyl alcohol, polyvinyl butyral, polyacrylate salts, polylactic acid, (hydrophilic thermoplastics), and hydrophobic or hydrophilic UV-curable acrylate and methacrylate resins (thermosets).

Binders can contain additional components such as surfactants to promote adhesion with the sinterable components, these may include stearic acid, oleic acid, oleyl amine, fish oil, Pluronic surfactants, block copolymers of polyethylene oxide and polypropylene oxide, sodium dodecyl sulfate, molecules containing a hydrophobic moiety and a hydrophilic moiety. These molecules may include phosphate, sulfate, ammonium, carboxylates, or other amphiphilic molecules. Binder can contain viscosity modifiers such as oligomers, meaning short chain polymers, typically below 5 kg/mol or below 1 kg/mol, of the polymers listed above, glycerin, phthalate-containing molecules, dibutyl phthalate, dioctyl phthalate or solvents such as water, or organic solvents, such as toluene, xylenes, alkanes, decane, hexane, isopar, n-methylpyrrolidone, dimethylformamide, tetrahydrofuran, dimethylsulfoxide, acetophenone, and others.

The choice of sintering selectivity material components depends on the active material to be sintered, and whether the sintering selectivity material is to be negative-patterned or positive-patterned. For negative patterning of metal feedstocks, the active sintering selectivity material is a material that sinters at a higher temperature than the metal, often a refractory ceramic, a precursor to a refractory ceramic, or an oxidizing agent that selectively transforms the metal into a refractory ceramic. The inhibiting material either forms a layer on or adjacent to the sinterable particles in the pattern, separate particles. Examples of materials that sinter at temperatures above most engineering metals such as bronze, brass, aluminum alloys, and steel, are: aluminosilicate minerals, alumina, zirconia, iron oxide, chromite, ceria, yttria, silicon carbide, calcium oxide-containing ceramics, magnesium oxide-containing ceramics, materials or ceramics containing an element, where those elements include calcium (Ca), magnesium (Mg), barium (Ba), strontium (Sr), titanium (Ti), aluminum (Al), zirconium (Zr), yttrium (Y), iron (Fe), cerium (Ce), vanadium (V), tungsten (W), lanthanum (La), hafnium (Hf), tantalum (Ta), niobium (Nb), and chromium (Cr), or mixtures/solid solutions of these.

Active materials could be nanoparticles or microparticles of these materials suspended in ink, or chemical precursors to the ceramics such as salts that decompose and form a metal oxide when exposed to process steps such as thermal debind, early sintering, or reaction with a solution in a solvent-debind step. Suitable salts include aluminum nitrate, aluminum bromide, aluminum chloride, aluminum hydroxide, aluminum iodide, aluminum phosphate, aluminum lactate, aluminum sulfate, aluminum monostearate, zirconium nitrate, zirconium carbonate, ammonium zirconate, zirconyl chloride, zirconyl nitrate, yttrium carbonate, yttrium chloride, yttrium nitrate, iron acetyl aetonate, ferrocene, iron citrate, iron chloride, iron bromide, iron oxalate, iron phosphate, iron sulfate, iron nitrate, cerium bromide, cerium chloride, cerium hydroxide, cerium nitrate, cerium oxalate, cerium sulfate, ceric ammonium nitrate, vanadium chloride, vanadium chloride tetrahydrofuran, vanadium oxychloride, salts of the elements calcium (Ca), magnesium (Mg), barium (Ba), strontium (Sr), titanium (Ti), aluminum (Al), zirconium (Zr), yttrium (Y), iron (Fe), cerium (Ce), vanadium (V), tungsten (W), lanthanum (La), hafnium (Hf), tantalum (Ta), niobium (Nb), and chromium (Cr) and others.

The non-metal ion in the metal-salt can be selected to be an oxidizing agent such as sulfate, ammonium nitrate, chlorate, chlorite, hypochlorite, perchlorate, permanganate, persulfate, or nitrate, to enhance the sintering inhibition. Some metal ions also enhance oxidizing behavior, such as cerium ions. These oxidizing ions could also be part of a compound that does not contain a metal ion, such that the sintering selectivity material acts solely to oxidize the sintering metals in the inhibition pattern.

In positive patterned metals, the active component of the material is a reducing agent or flux to facilitate sintering. The reducing agent could be particles of graphite, graphene, carbon nanotubes, fullerenes, other forms of carbon with sp2 bonding, sodium borohydride, reducing sugars, glucose, compounds containing tin(II), compounds containing iron (II), oxalic acid, formic acid, ascorbic acid, acetol, alphahydroxy ketones, phosphorous acid, phosphites, hypophosphites, borax, ammonium chloride, hydrochloric acid, and others.

The active sintering selectivity material for negative patterned ceramics can use a similar strategy for the active selective sintering agent as negatively patterned metals, by introducing a material with a higher sintering temperature than the ceramic to be sintered, either directly through particles, or indirectly through chemical precursors. The oxidative strategy for sintering inhibition is not generally used. The active sintering selectivity material for positive patterned ceramics varies widely based on the type of ceramic. Addition of ceramic fluxes or precursors to ceramic fluxes is one strategy. Ceramic fluxes are typically oxides of or compounds containing lead, sodium, potassium, lithium, calcium, magnesium, barium, zinc, strontium, and manganese, feldspars, boron, and glass frit particles with low glass transition.

For polymeric feedstocks, the polymer to be sintered would be embedded in a binder that has a lower processing temperature, such as the glass transition or melting point. Sintering selectivity material could be a lubricant, surfactant that prevents bonding, negative selectivity, or a plasticizer/solvent selective for the feedstock polymer, chemical linker or selective adhesive to promote adhesion between particles. Polymer sintering is generally applicable to thermoplastic materials. Examples of polymers suitable for sintering are fluorinated ethylene propylene, polytetrafluoroethylene, polyetheretherketone, polyamides, polyacrylonitrile butadiene styrene, polylactic acid, or other polymers used in SLS or FDM processes.

Other components of the sintering selectivity material depend on the deposition process. Other components can be solvents to suspend or dissolve other components, viscosity modifiers, surfactants, and stabilizers. Examples of solvents are: water, organic solvents, volatile solvents, or high boiling point solvents, polar, or non-polar solvents, toluene, xylenes, alkanes, decane, hexane, isopar, n-methylpyrrolidone, dimethylformamide, tetrahydrofuran, dimethylsulfoxide, acetophenone, and others.

Viscosity modifiers and surfactants can be the same as chemicals used in the feedstock as binders, surfactants, and viscosity modifier components of the feedstock. Some of these are: glycerin, polymers or oligomers that are soluble in the solvent, small quantities of materials used as binders in the feedstocks, stearic acid, sodium dodecyl sulfate, and others discussed in more detail above. For example, to pattern sintering selectivity material using a piezo-driven inkjet print head, material viscosity in the range of 10-14 cP is desired. If the ink contains components that can undergo slow degradation, stabilizers can be used to extend shelf life. Some stabilizers are antioxidants, UV absorbers, butylated hydroxytoluene, 4-methoxyphenol, and others.

The below table shows a list of single solvents and the results of whether 50 mg salt plus 1 milliliter solvent dissolves. Simple solvents do not simultaneously dissolve feedstock and a sintering inhibitor used as the sintering-selectivity fluid, in this case Al(NO₃)₃. Polar solvents such as NMP and DMF (dimethylformamide) dissolve the inhibiting salts. Non-polar solvents dissolve the feedstock. For the sintering selectivity material to penetrate the feedstock layer, the sintering selectivity material has to dissolve both.

Simple solvents do not simultaneously dissolve feedstock and a sintering inhibitor, such as Al(NO₃)₃. Polar solvents such as NMP and DMF dissolve the inhibiting salts. Non-polar solvents dissolve the feedstock. For sintering selectivity material to penetrate a feedstock layer, the sintering selectivity material has to dissolve both. Table 1 shows examples of simple solvents, and Table 2 shows examples of co-solvents.

**Table 1**

| Solvent | Al(NO₃)₃ | Al₂(SO₄)₃ | Al monostearate | Feedstock (room temp) | Feedstock (80° C) |
|---|---|---|---|---|---|
| NMP | Yes | Yes | No | No | Yes |
| DMF | Yes | Yes | No | No | Yes |
| PC | No | No | No | No | - |
| Isopar | No | No | No | Yes | Yes |
| Decane | No | No | No | Yes | Yes |
| Xylenes | No | No | No | Yes | Yes |

**Table 2**

| Solvent (50/50 v/v) | Al(NO₃)₃ | Al₂(SO₄)₃ | Al monostearate | Feedstock |
|---|---|---|---|---|
| NMP/Xvlenes | 2 liquid phases | No | No | Yes |
| NMP/Toluene | No | No | No | Partial |
| NMP/PC | Yes | Partial | - | No |
| DMF/Toluene | No | No | No | Partial |
| DMSO/Toluene | No | No | No | Partial |

A "Partial" result means that the solution is hazy at room temperature. NMP is n-methylpyrrolidone, DMSO is dimethysulfoxide, and PC is propylene carbonate. NMP and xylenes as co-solvents can dissolve both a salt and the feedstock, but the form a phase-separated 2-liquid system.

The embodiments here provide a solution to the registration problem discussed above by utilizing inherent surface energy and surface tension properties of the binder containing the dense, cohesive, sinterable feedstock and the sintering selectivity material. The sintering selectivity is obtained when the thermal debinding results in surface energy contrast. This obviates the need for a separate liquid patterning system, reducing complexity and cost, and also eliminates potential defects that may arise due to imprecise registration between the thermal debound pattern and the sintering selectivity material.

Preliminary experiments demonstrated proof of concept. Thermal patterned debinding, in this case using a laser, created a surface energy contrast that enabled patterning of the sintering selectivity material.

In the experiments, a laser cutter was used to locally thermally debind 17-4PH MIM (metal injection molding) feedstock sheets to test different laser intensities and speed settings, relative to maximum power and speed. The power settings were varied as a percentage of maximum power from 10% to 0.1% and the speed settings varied from 1% to 0.1%. At least partial wetting of the material in the pattern was observed.

One of the experiments doctor bladed the sintering selectivity material onto the pattern. Local wetting in the debound regions was observed. Another experiment added a solvent debinding step after the thermal debinding, before the application of the sintering selectivity material. Local wetting was again observed.

The experiments showed that a surface energy contrast formed by laser based patterning to debind the feedstock can achieve changes in the surface energy that allows deposition of the sintering selectivity material to the pattern. The experiments also allowed measurement of the contact angle, or wetting angle, difference between the bond and debound feed stock. The results are below.

| Contact Angle | | 50µg/mL | 50µg/mL | 50µg/mL | 150µg/mL |
|---|---|---|---|---|---|
| Substrate | Ink | NMP-AS | NMP/Xylenes-AN | NMP-AN | NMP-AN |
| **17-4PH MIM sheet** | 82.0 ± 1.0° | 95.5 ± 0.9° | 55.3 ± 0.5° | 106.2 ± 0.4° | 108.3 ± 3.1° |
| 17-4PH MIM sheet - debound | < 5° | < 5° | < 5° | < 5° | 23.4 ± 1.3° |
| **316L MIM sheet** | 81.4 ± 1.4° | | 90.5 ± 0.5° | | |
| 316L MIM sheet - debound | < 5° | | < 5° | | |

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A system, comprising:
a surface;
a feedstock deposition head arranged to deposit a sinterable feedstock having a binder onto the surface;
a patterning system arranged adjacent the surface to change the feedstock surface energy according to a pattern to form selective surface energy patterns on the feedstock;
a sintering-selectivity material deposition head arranged adjacent the feedstock deposition head to deposit sintering-selectivity fluid, the sintering-selectivity fluid selected to conform to the selective surface energy patterns; and
a sintering chamber to sinter the feedstock after deposition of the anti-sintering agent.

2. The system as claimed in claim 1, wherein the patterning system comprises one of a patterning laser, grating light valve, digital micromirror device, ion, electron or particle bombardment system, a plasma treatment system, oxygen plasma treatment system, or a deposition system the deposits chemical modifiers in a patterned manner.

3. The system as claimed in claim 1 or claim 2, wherein the sinterable feedstock comprises at least one selected from the group consisting of: stainless steel alloys, carbonyl iron, magnetic alloys, copper-nickel alloys, titanium, copper, alumina, zirconia, aluminosilicate minerals and glasses, polymer particles, and many others including various metals, metal alloys, ceramics, and plastics / polymers.

4. The system as claimed in any preceding claim, wherein the sinterable feedstock is dense, optionallywherein the dense, sinterable feedstock is cohesive.

5. The system as claimed in any preceding claim, wherein the binder comprises at least one of hydrophobic thermoplastics, hydrophilic thermoplastics, and thermoset materials optionally wherein the hydrophobic thermoplastics comprise at least one selected from the group consisting of: polyethylene; polypropylene; polyoxymethylene; paraffin; carnuba wax; polypropylene oxide, and polybutylene oxide.
optionally wherein the hydrophilic thermoplastics comprise at least one selected from the group consisting of: polyethylene oxide; polypropylene carbonate; polybutylene carbonate; alginate; agar; cellulose; methylcellulose; methylcellulose-based compounds; sodium lignosulfonate; polyvinyl alcohol; polyvinyl butyral; polyacrylate salts; and polylactic acid optionally wherein the thermoset materials comprise at least one of UV-curable acrylate and methacrylate resins.

6. The system as claimed in claim 1, wherein the binder further comprises at least one of a surfactant and a viscosity modifier;
optionally wherein the surfactant comprises at least one selected from the group consisting of: stearic acid; oleic acid; oleyl amine; fish oil; Pluronic surfactants; block copolymers of polyethylene oxide and polypropylene oxide; sodium dodecyl sulfate; phosphates; sulfates; ammonium; carboxylates; and other amphiphilic molecules;
optionally wherein the viscosity modifier comprises at least one selected from the group consisting of: oligomers; glycerin; phthalate-containing molecules; dibutyl phthalate; dioctyl phthalate; water; organic solvents; toluene; xylenes; alkanes; decane; hexane; isoparaffin solvents; n-methylpyrrolidone; dimethylformamide; tetrahydrofuran; dimethylsulfoxide; and acetophenone.

7. A method of forming three-dimensional objects, comprising:
depositing a sinterable feedstock comprising a binder onto a surface;
forming a surface energy pattern in the sinterable feedstock by pattern-wise debinding of the binder from the sinterable feedstock;
depositing a fluid comprising a sintering-selectivity material mixed with a solvent selected to cause the sintering-selectivity material to conform to the surface energy pattern; and
sintering the feedstock.

8. The method of claim 7 wherein forming a surface energy pattern by pattern-wise debinding of the binder comprises one of either thermal debinding or solvent debinding.

9. The method as claimed in claim 7 or claim 8, wherein depositing the sinterable feedstock comprises depositing one selected from the group consisting of: stainless steel alloys; carbonyl iron; stainless steel 316; magnetic alloys, copper-nickel alloys, titanium, copper, alumina, zirconia, aluminosilicate minerals and glasses, polymer particles, metals, metal alloys, ceramics, plastics and polymers.

10. The method as claimed in any of claims 7 to 9, wherein forming a surface energy pattern comprises forming a negative surface energy pattern, optionally wherein depositing the sinterable feedstock comprises depositing metal and depositing the sintering-selectivity material comprises depositing at least one of the group consisting of: aluminosilicate minerals; alumina; zirconia; iron oxide; chromite; ceria; yttria; silicon carbide; calcium oxide-containing ceramics; magnesium oxide-containing ceramics; ceramics containing at least one of the elements calcium, magnesium, barium, strontium, titanium, aluminum, zirconium, yttrium, iron, cerium, vanadium, tungsten, lanthanum, hafnium, tantalum, niobium, and chromium; and mixtures thereof.

11. The method as claimed in claim 10, wherein depositing the sintering-selectivity material comprises depositing one of a refractory ceramic, a precursor to a refractory ceramic, an oxidizing agent capable of transforming the material to be sintered into a material with a higher sintering temperature, a material with a sintering temperature greater than 1500 C, a material that transforms into a material with a sintering temperature greater than 1500 C, and a material that decomposes and forms a metal oxide with a sintering temperature higher than the material to be sintered, optionally wherein the material that decomposes comprises a salt comprising one of the group consisting of: aluminum nitrate; aluminum bromide; aluminum chloride; aluminum hydroxide; aluminum iodide; aluminum phosphate; aluminum lactate; aluminum sulfate; aluminum monostearate; zirconium nitrate; zirconium carbonate; ammonium zirconate; zirconyl chloride; zirconyl nitrate; yttrium carbonate; yttrium chloride; yttrium nitrate; iron acetyl aetonate; ferrocene; iron citrate; iron chloride; iron bromide; iron oxalate; iron phosphate; iron sulfate; iron nitrate; cerium bromide; cerium chloride; cerium hydroxide; cerium nitrate; cerium oxalate; cerium sulfate; salts containing the elements include calcium, magnesium, barium, strontium, titanium, aluminum, zirconium, yttrium, iron, cerium, vanadium, tungsten, lanthanum, hafnium, tantalum, niobium, and chromium and ceric ammonium nitrate.

12. The method as claimed in any of claims 7 to 9, wherein forming the surface energy pattern comprises forming a positive surface energy pattern, optionally wherein depositing the sinterable feedstock comprises depositing metal, and depositing the sintering-selectivity material comprises depositing at least one of the group consisting of: particles of graphite; graphene; carbon nanotubes; fullerenes; other forms of carbon with sp2 bonding; sodium borohydride; reducing sugars; glucose; compounds containing tin(II); compounds containing iron (II); oxalic acid; formic acid; ascorbic acid; acetol; alphahydroxy ketones; phosphorous acid; phosphites; hypophosphites; borax; ammonium chloride; and hydrochloric acid.

13. The method as claimed in claim 12, wherein depositing the sinterable feedstock comprises depositing a ceramic, and depositing the sintering-selectivity material comprises depositing at least one of the group consisting of: oxides of, or compounds containing, lead, sodium, potassium, lithium, calcium, magnesium, barium, zinc, strontium, and manganese; feldspars; boron; and glass frit particles with low glass transition, optionally wherein the fluid comprises a solvent selected from the group consisting of: water; organic solvents; volatile solvents; or high boiling point solvents; polar or non-polar solvents; toluene; xylenes; alkanes; decane; hexane; isoparaffin; n-methylpyrrolidone; dimethylformamide; tetrahydrofuran; dimethylsulfoxide; and acetophenone.

14. The method as claimed in claim 12, wherein depositing the sintering-selectivity material comprises depositing the sintering-selective material containing at least one of a surfactant and a viscosity modifier selected from the group consisting of: glycerin, polymers; oligomers that are soluble in the solvent; binders used in the feedstocks; stearic acid; and sodium dodecyl sulfate.

15. The method as claimed in any of claims 7 to 14, wherein the sinterable feedstock is dense, optionally wherein the dense, sinterable feedstock is cohesive.
